# EUROPEAN PATENT APPLICATION

(11) **EP 3 446 954 A1**
(43) Date of publication of application: **27.02.2019**
(21) Application number: 18190449.1
(22) Date of filing: 23.08.2018
(51) Int. Cl.: B62J 7/00, B62J 9/00, B62J 11/00, A47F 7/02, B62J 99/00, B62J 21/00

(54) **EYEGLASS CARRYING DEVICE FOR BICYCLES AND/OR SIMILAR TUBULAR BODIES AND BICYCLE PROVIDED WITH SUCH AN EYEGLASS CARRYING DEVICE**

(30) Priority: 24.08.2017 IT 201700095851
(71) Applicant: KASK S.p.A., 24060 Chiuduno (BG) (IT)
(72) Inventor: GOTTI, Angelo, 24027 NEMBRO (BG) (IT)
(74) Representative: Branca, Emanuela

(57) **Abstract**

An eyeglass carrying device (1) for bicycles and/or similar tubular bodies, comprising: at least one engagement portion (2) provided with at least one fastening mechanism (3) arranged to grip a portion (101) of a pair of eyeglasses (100) to hold the latter in a predetermined position; at least one supporting portion (4), preferably made on the opposite side with respect to the engagement portion (2), provided with at least one supporting surface (5) adapted for engaging a destination surface (202) of a frame (201) of a bicycle (200) and/or of a similar tubular body not forming part of the eyeglass carrying device (1); at least one locking element (6) able to be operatively associated with the supporting portion (4) to keep the eyeglass carrying device (1) engaged to the destination surface (202) of the frame (201) of the bicycle (200) and/or at the similar tubular body not forming part of the eyeglass carrying device (1).

## Description

The present invention refers to an eyeglass carrying device for bicycles.

Another object of the present invention is a bicycle provided with the aforementioned eyeglass carrying device.

The object of the present invention lends itself to being used in the field of sports and has particular use in the field of cycling both at amateur and competitive level.

As known, during any sports activity of the cycling type, the athletes and/or cyclists can be provided with and use various accessories that, when not being used, need to be stably arranged so that they do not interfere with the normal athletic and/or physical activity being carried out.

With particular reference to eyeglasses intended for protecting the eyes of athletes and/or cyclists from sunlight, from rain, from wind, from air resistance, from insects and from undesired contact with foreign bodies, the passage from a usage condition to a non-use condition thereof during the sporting activity, especially when competitive, requires the athlete and/or cyclist to search for a safe place in which to momentarily and stably place the removed eyeglasses. Generally, once removed, the eyeglasses are inserted in a pocket made in the sports clothing of the athlete and/or cyclist.

The act of removing the eyeglasses from the face of the athlete and/or cyclist and the positioning thereof inside a pocket requires a series of manual actions that significantly disturb the performance of the athletic and physical activity being carried out and has some risks in terms of safety.

In particular, the aforementioned operation can be carried out in two different ways that both require that one or even both of the hands be removed from the handlebar of the bicycle.

In a first case the athlete and/or the cyclist, must take a hand off the handlebar to grip the eyeglasses and remove them from the face. Since the athlete and/or the cyclist has to insert the eyeglasses in a respective pocket, the size of which is generally small and the position of which is normally located on a side or on the back of the athlete and/or cyclist, it is necessary to close up the eyeglasses, folding the respective temples, so that they take up a low-bulk configuration. The folding of the temples can be ably carried out using a single hand with the risk that the eyeglasses may slip or fall as the bicycle moves forwards.

In a second case, once the eyeglasses have been removed from the face with one hand, the athlete and/or the cyclist takes the other hand off the handlebar to quickly fold the temples and take the eyeglasses into a minimum-bulk configuration useful for the insertion thereof inside the aforementioned pocket. The handling of the eyeglasses with two hands involves a high accident risk for the athlete and/or the cyclist since, by temporarily leaving the handlebar, he/she rides the bicycle with only the balance of his/her body.

The act of repositioning the eyeglasses on the face of the athlete and/or cyclist also requires a series of movements that disturb the performance of the athletic and physical activity, with accident risks for him/her. In other situations, instead of inserting the eyeglasses in the respective pockets made in the garments used, the athletes and/or cyclists can place the eyeglasses on the helmets by inserting the temples of the eyeglasses inside the corresponding aeration openings. These operations of finding the aeration openings most suitable for accommodating the temples of the eyeglasses, as well as the insertion of such temples in the selected openings, also inevitably require the athletes and/or cyclists to use both hands, with clear risks to their safety.

In the case in which the athletes and/or cyclists do not have either suitable pockets made in the garments used, nor helmets provided with aeration openings suitable for receiving the respective temples inserted in them, the removal of the eyeglasses from the face is normally carried out and they are kept in raised position on the forehead, collecting sweat and/or condensation.

In addition, it should be noted that all of the removal operations of the eyeglasses from the face of athletes and/or cyclists like those relative to the repositioning of the eyeglasses onto the face are generally carried out during races and/or similar competitions in which it is necessary to maintain one's concentration and not be distracted by possible impediments that can arise through the handling of the eyeglasses.

The main purpose of the present invention is to provide an eyeglass carrying device for bicycles and similar tubular bodies, as well as a bicycle provided with such an eyeglass carrying device, capable of solving the problems encountered in the prior art.

A further purpose of the present invention is to propose an eyeglass carrying device for bicycles and similar tubular bodies, as well as a bicycle provided with such an eyeglass carrying device, which allow the eyeglasses worn by an athlete and/or cyclist to be positioned in a single operation or through a limited number of operations.

Another purpose of the present invention is to propose an eyeglass carrying device for bicycles and similar tubular bodies, as well as a bicycle provided with such an eyeglass carrying device, which allow the quick and simple positioning of the eyeglasses worn by an athlete and/or a cyclist using a single hand.

Another purpose of the present invention is to propose an eyeglass carrying device for bicycles and similar tubular bodies, as well as a bicycle provided with such an eyeglass carrying device, capable of ensuring the stable positioning of the eyeglasses worn by an athlete and/or cyclist according to a predetermined position. Finally, a purpose of the present invention is to propose an eyeglass carrying device for bicycles and similar tubular bodies, as well as a bicycle provided with such an eyeglass carrying device, which allow the immediate positioning of the eyeglasses worn by an athlete and/or cyclist in total safety.

The purposes specified above, and yet others, are substantially achieved by an eyeglass carrying device for bicycles and similar tubular bodies, as well as a bicycle provided with such an eyeglass carrying device, as expressed and described in the following claims.

The description of a preferred, but not exclusive, embodiment of an eyeglass carrying device for bicycles and similar tubular bodies, as well as a bicycle provided with such an eyeglass carrying device, in accordance with the present invention, will now be given, as an example. Such a description will be carried out hereinafter with reference to the attached drawings, provided for indicating and therefore not limiting purposes, in which:
figure 1 is a perspective view of an eyeglass carrying device, in accordance with a first embodiment of the present invention;
figure 2 is an exploded perspective view of the eyeglass carrying device according to figure 1;
figure 3 is a front elevational view of the eyeglass carrying device according to figures 1 and 2;
figure 4 is a side elevational view of the eyeglass carrying device according to figures 1 to 3;
figure 5 is a section of the eyeglass carrying device according to figures 1 to 4, carried out according to the line V-V of figure 4;
figure 6 is a plan view of the eyeglass carrying device according to figures 1 to 5;
figure 7 is a view from below of the eyeglass carrying device according to figures 1 to 6;
figure 8 is a perspective view of an eyeglass carrying device, in accordance with a second embodiment of the present invention;
figure 9 is an exploded perspective view of the eyeglass carrying device according to figure 8;
figure 10 is a front elevational view of the eyeglass carrying device according to figures 8 and 9;
figure 11 is a side elevational view of the eyeglass carrying device according to figures 8 to 10;
figure 12 is a section of the eyeglass carrying device according to figures 8 to 11, carried out according to the line XII-XII of figure 11;
figure 13 is a plan view of the eyeglass carrying device according to figures 8 to 12;
figure 14 is a view from below of the eyeglass carrying device according to figures 8 to 13;
figure 15 is a perspective view of an eyeglass carrying device, in accordance with a third embodiment of the present invention;
figure 16 is an exploded perspective view of the eyeglass carrying device according to figure 15;
figure 17 is a front elevational view of the eyeglass carrying device according to figures 15 and 16;
figure 18 is a side elevational view of the eyeglass carrying device according to figures 15 to 17;
figure 19 is a section of the eyeglass carrying device according to figures 15 to 18, carried out according to the line XIX-XIX of figure 18;
figure 20 is a plan view of the eyeglass carrying device according to figures 15 to 19;
figure 21 is a view from below of the eyeglass carrying device according to figures 15 to 20;
figure 22 is a perspective view of the eyeglass carrying device according to figures 1 to 21 applied onto a frame of a bicycle;
figure 23 is a perspective view of the eyeglass carrying device according to figures 1 to 22 applied onto a frame of a bicycle and fastened to a pair of glasses;
figure 24 is a perspective view of two eyeglass carrying devices like the one depicted in figures 1 to 23, one applied onto a frame of a bicycle, the other onto the handlebar thereof;
figure 25 is a perspective view of the eyeglass carrying devices illustrated in figure 24 both fastened to a respective portion of a pair of eyeglasses;
figure 26 is a perspective view of an eyeglass carrying device, in accordance with a fourth embodiment of the present invention;
figure 27 is an exploded perspective view of the eyeglass carrying device according to figure 26;
figure 28 is a front elevational view of the eyeglass carrying device according to figures 26 and 27;
figure 29 is a side elevational view of the eyeglass carrying device according to figures 26 to 28;
figure 30 is a section of the eyeglass carrying device according to figures 26 to 29 carried out along the line XXX-XXX of figure 29;
figure 31 is a plan view of the eyeglass carrying device according to figures 26 to 30;
figure 32 is a half-section of the eyeglass carrying device according to figures 26 to 31, carried out along the line XXXII-XXXII of figure 31;
figure 33 is a view from below of the eyeglass carrying device according to figures 26 to 32;
figure 34 is a perspective view of an eyeglass carrying device, in accordance with a fifth embodiment of the present invention;
figure 35 is an exploded perspective view of the eyeglass carrying device according to figure 34;
figure 36 is a front elevational view of the eyeglass carrying device according to figures 34 and 35;
figure 37 is a side elevational view of the eyeglass carrying device according to figures 34 to 36;
figure 38 is a section of the eyeglass carrying device according to figures 34 to 37 carried out along the line XXXVIII-XXXVIII of figure 37;
figure 39 is a view from below of the eyeglass carrying device according to figures 34 to 38;
figure 40 is a plan view of the eyeglass carrying device according to figures 34 to 39;
figure 41 is a half-section of the eyeglass carrying device according to figures 34 to 40, carried out according to the line XLI-XLI of figure 40;
figure 42 is a perspective view of the eyeglass carrying device according to figures 34 to 41 applied onto a frame of a bicycle, in accordance with the present invention;
figure 43 is a perspective view of the eyeglass carrying device according to figures 34 to 43 applied onto a frame of a bicycle and fastened to a pair of eyeglasses;
figure 44 is a perspective view of an eyeglass carrying device, in accordance with a sixth embodiment of the present invention;
figure 45 is an exploded perspective view of the eyeglass carrying device according to figure 44;
figure 46 is a plan view of the eyeglass carrying device according to figures 44 and 45;
figure 47 is a view from below of the eyeglass carrying device according to figures 44 to 46;
figure 48 is a front elevational view of the eyeglass carrying device according to figures 44 to 47;
figure 49 is a section of the eyeglass carrying device according to figures 44 to 48, carried out according to the line XLIX-XLIX of figure 48;
figure 50 is a side elevational view of the eyeglass carrying device according to figures 44 to 49;
figure 51 is a section of the eyeglass carrying device according to figures 44 to 50, carried out according to the line LI-LI of figure 50;
figure 52 is a perspective view of the eyeglass carrying device according to figures 44 to 41 applied onto a frame of a bicycle, in accordance with the present invention;
figure 53 is a perspective view of the eyeglass carrying device according to figures 44 to 52 applied onto a frame of a bicycle and fastened to a pair of eyeglasses;
figure 54 is a perspective view of an eyeglass carrying device, in accordance with a seventh embodiment of the present invention;
figure 55 is an exploded perspective view of the eyeglass carrying device according to figure 54;
figure 56 is a plan view of the eyeglass carrying device according to figures 54 and 55;
figure 57 is a view from below of the eyeglass carrying device according to figures 54 to 56;
figure 58 is a front elevational view of the eyeglass carrying device according to figures 54 to 57;
figure 59 is a section of the eyeglass carrying device according to figures 54 to 58, carried out according to the line LIX-LIX of figure 58;
figure 60 is a side elevational view of the eyeglass carrying device according to figures 54 to 59;
figure 61 is a section of the eyeglass carrying device according to figures 54 to 60, carried out according to the line LXI-LXI of figure 60;
figure 62 is a perspective view of the eyeglass carrying device according to figures 54 to 61 applied onto a frame of a bicycle, in accordance with the present invention;
figure 63 is a perspective view of the eyeglass carrying device according to figures 54 to 62 applied onto a frame of a bicycle and fastened to a pair of glasses;
figure 64 is a detail of the eyeglass carrying device according to the previous figures according to a further embodiment thereof.

With reference to the attached figures, reference numeral 1 wholly indicates an eyeglass carrying device for bicycles and similar tubular bodies, in accordance with the present invention.

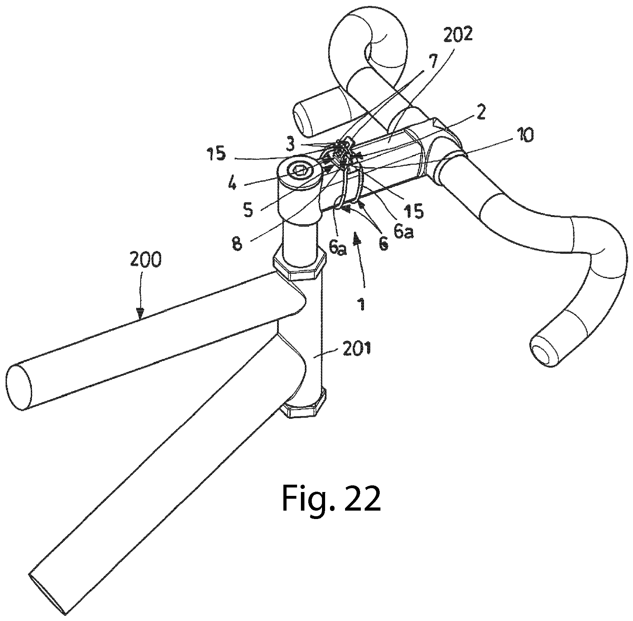

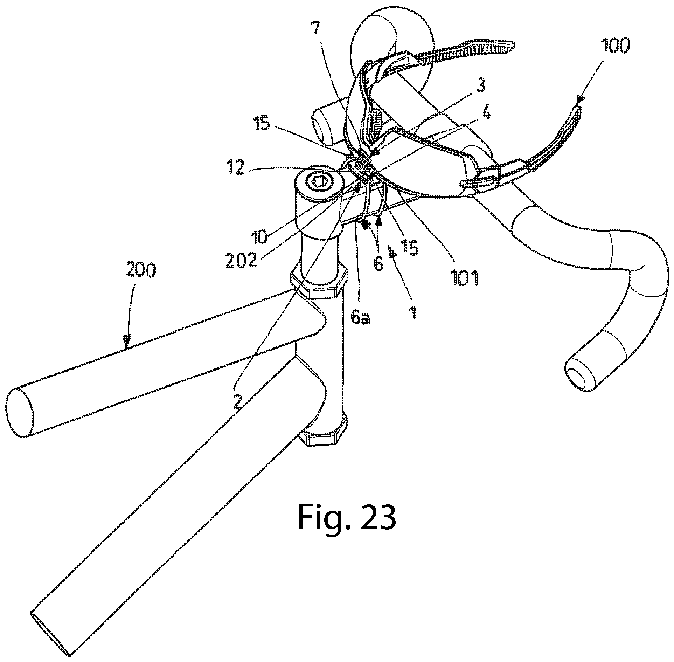

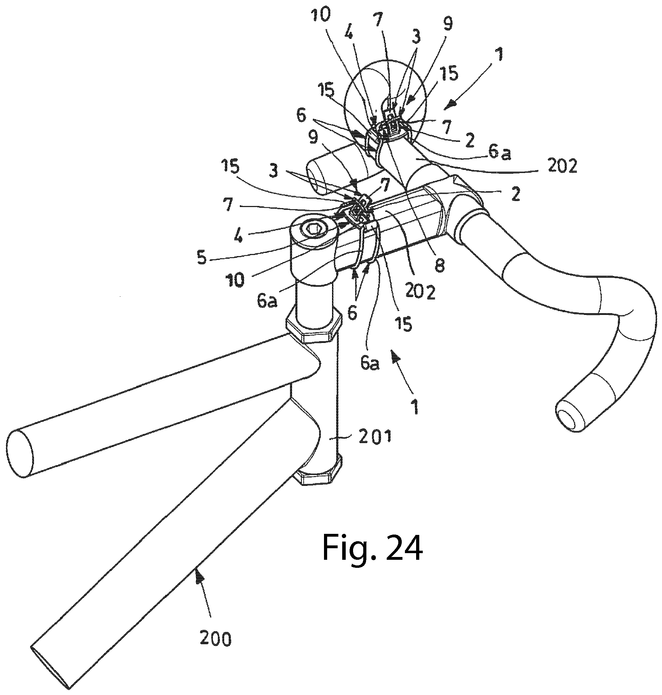

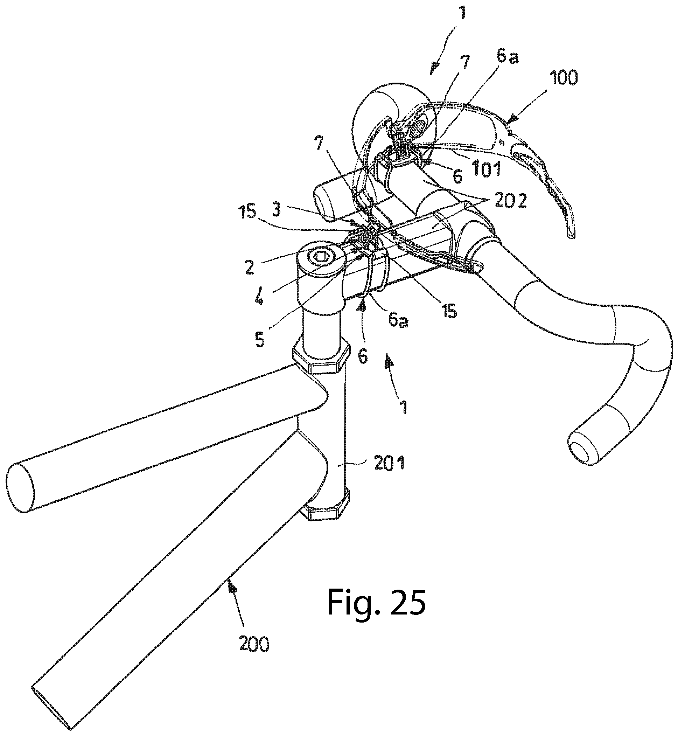

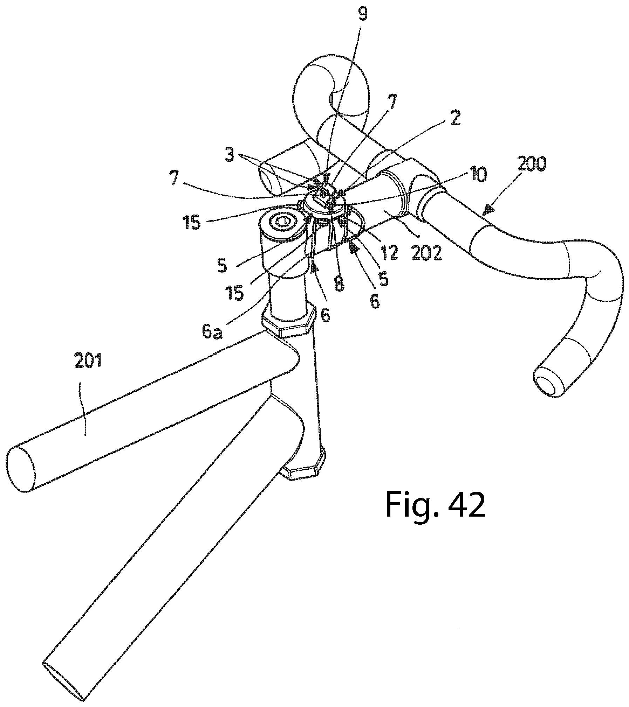

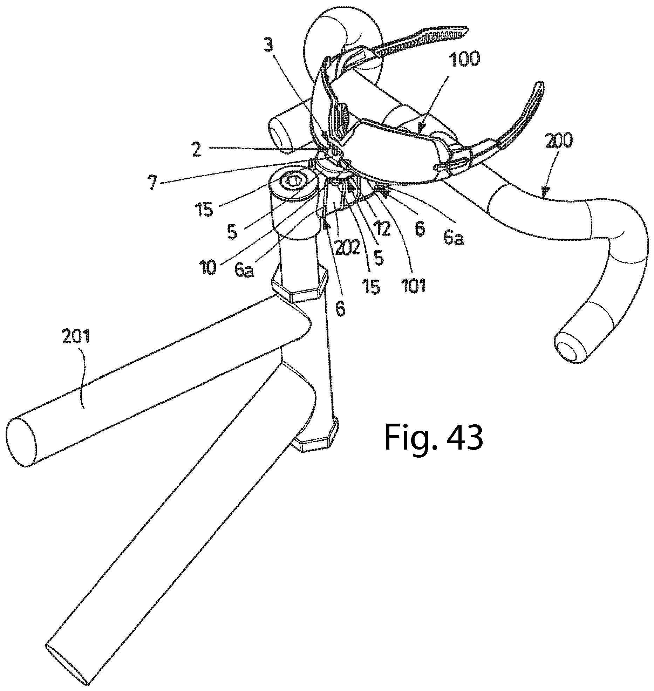

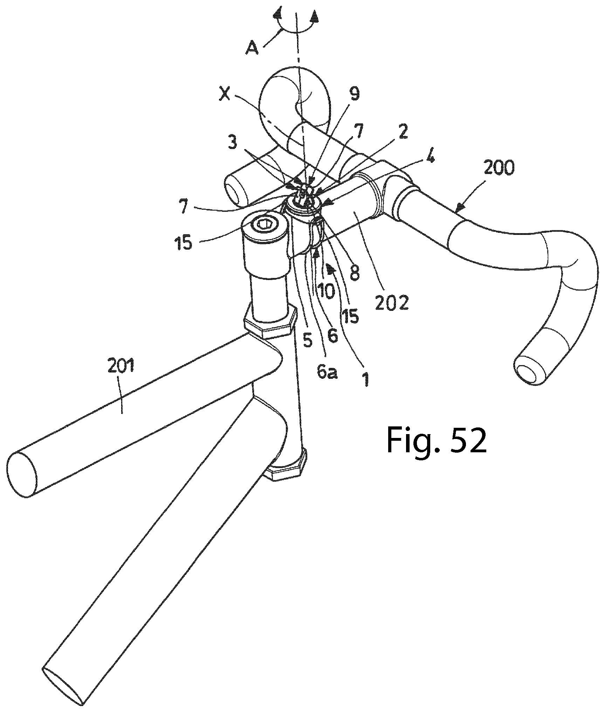

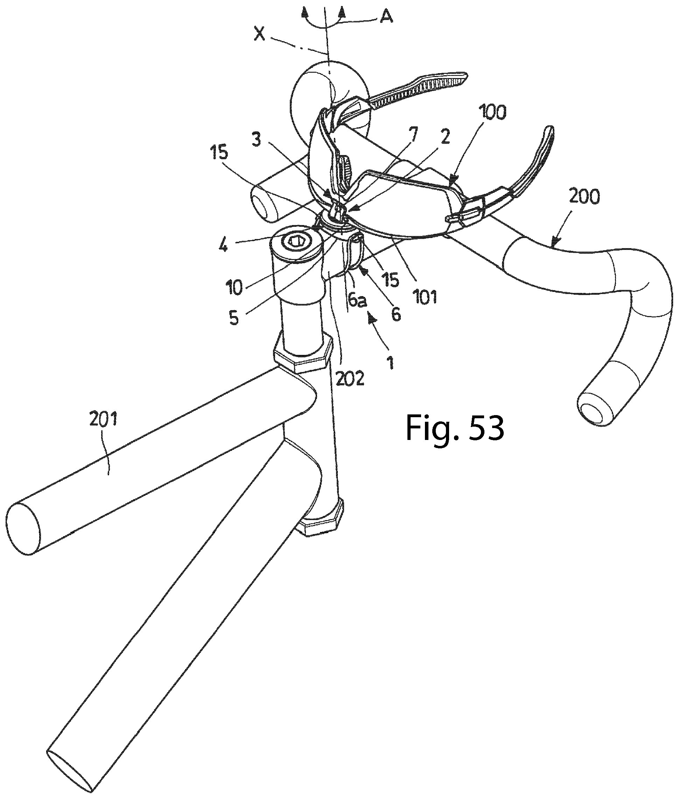

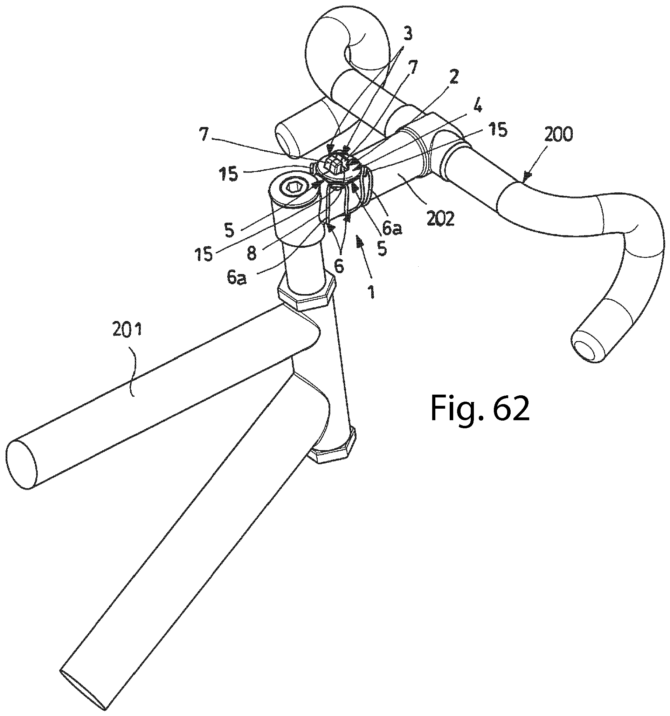

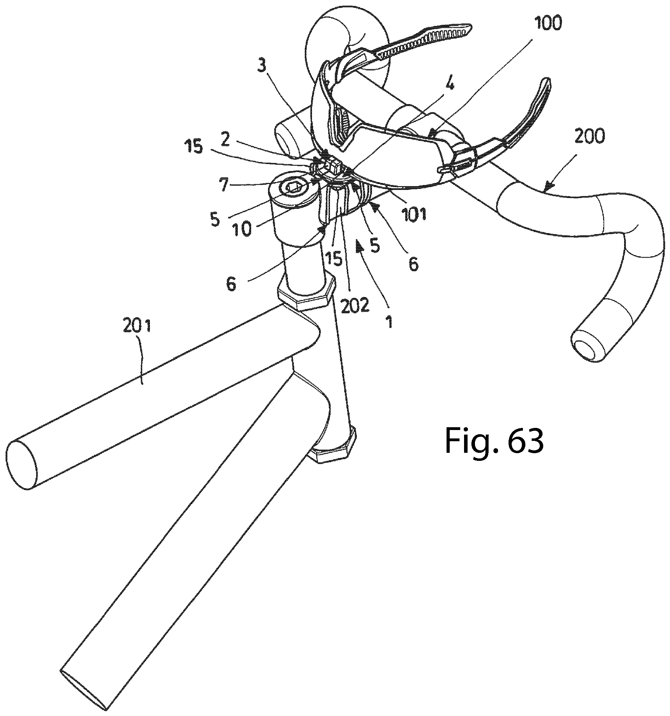

As can be seen in the attached figures, the eyeglass carrying device 1 comprises at least one engagement portion 2 provided with at least one fastening mechanism 3 arranged to grip a portion 101 (figures 22 to 25, 42, 43, 52, 53, 62 and 63), preferably, but not exclusively, the bridge, of a pair of eyeglasses 100 (figures 23, 25, 43, 53 and 63) to hold them in a predetermined position.

The portion 101 of the eyeglasses 100, able to be gripped by the fastening mechanism 3 of the eyeglass carrying device 1, can be different from the bridge, like for example the temples or the lenses.

The eyeglass carrying device 1 also comprises at least one supporting portion 4, preferably made on the opposite side with respect to the engagement portion 2, provided with at least one supporting surface 5 adapted for engaging a destination surface 202 of a frame 201 of a bicycle 200 and/or of a similar tubular body not forming part of the eyeglass carrying device 1.

The eyeglass carrying device 1 comprises at least one locking element 6 able to be operatively associated with the supporting portion 4 to keep the eyeglass carrying device itself engaged at the destination surface 202 of the frame 201 of the bicycle 200 and/or at the similar tubular body not forming part of the eyeglass carrying device 1.

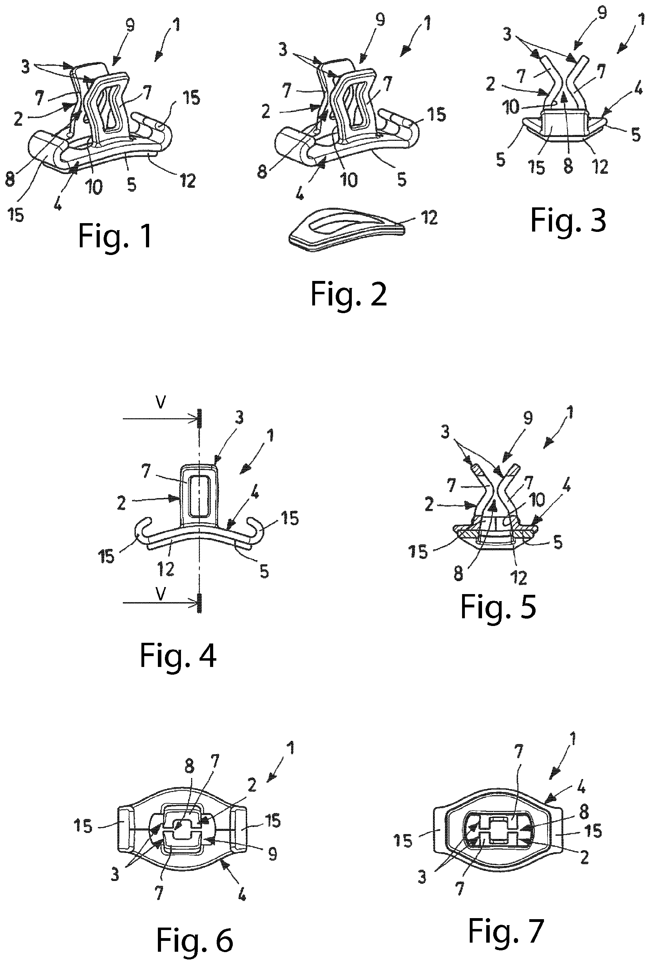

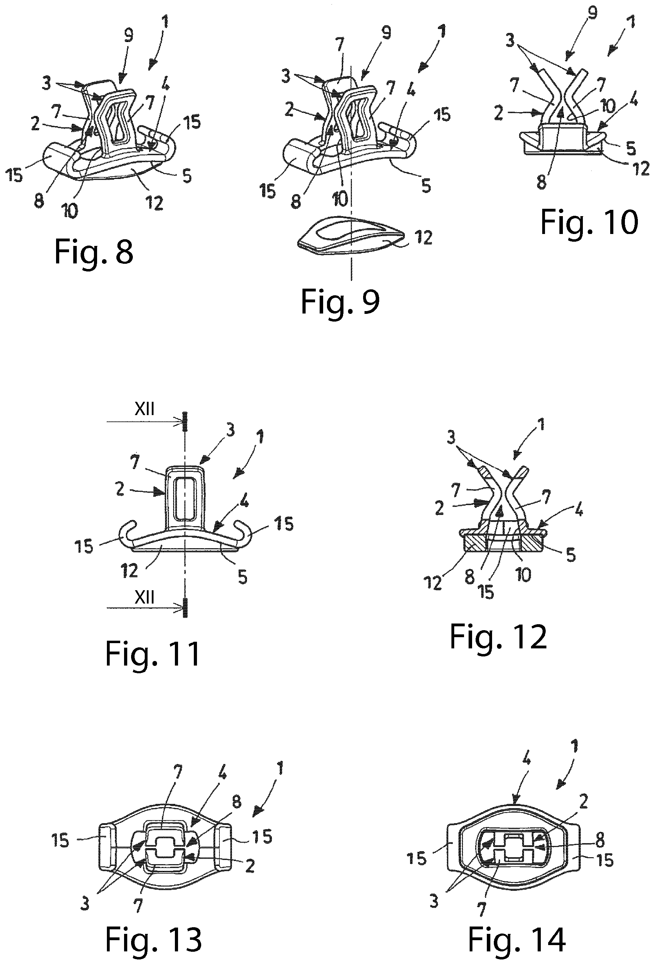

With reference to the embodiments illustrated in figures 1 to 53, the fastening mechanism 3 of the engagement portion 2 of the eyeglass carrying device 1 comprises at least one pair of fastening appendages 7 each developing from the supporting portion 4 to converge towards a common convergence point 8 in which such fastening appendages 7 are close to one another or in contact with each other.

With reference to the embodiments illustrated in figures 1 to 53, the fastening appendages 7 diverge from one another going away from the convergence point 8 and on the opposite side to the supporting portion 4 to define a facilitating groove 9 for the engagement of the portion 101 of the eyeglasses 100.

In detail, the fastening appendages 7 at least partially delimit a housing and locking seat 10 of the portion 101 of the eyeglasses 100 to be fastened and held.

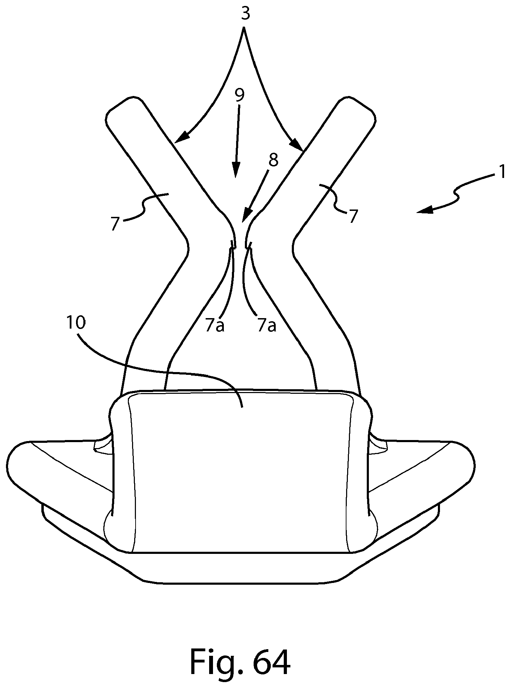

Advantageously, the fastening appendages 7 are elastically deformable to allow the insertion of the aforementioned portion 101 of the eyeglasses 100 in the respective housing and locking seat 10, as well as the extraction and disengagement of the portion 101 from such a housing and locking seat 10 through the opening out of the fastening appendages 7, or, possibly, of mobile parts of the latter, at the convergence point 8. According to a further advantageous aspect of the present invention, the eyeglass carrying device 1 can be provided with suitable abutment and holding surfaces 7a (figure 64) made on each of the fastening appendages 7 at the convergence point 8 to provide at least one abutment surface for the eyeglasses 100 housed in the respective housing and locking seat 10 and counteract the accidental disengagement thereof.

More in particular, the abutment surfaces 7a face towards the housing and locking seat 10 so as to hold the eyeglasses 100 in such a seat during the sports activity.

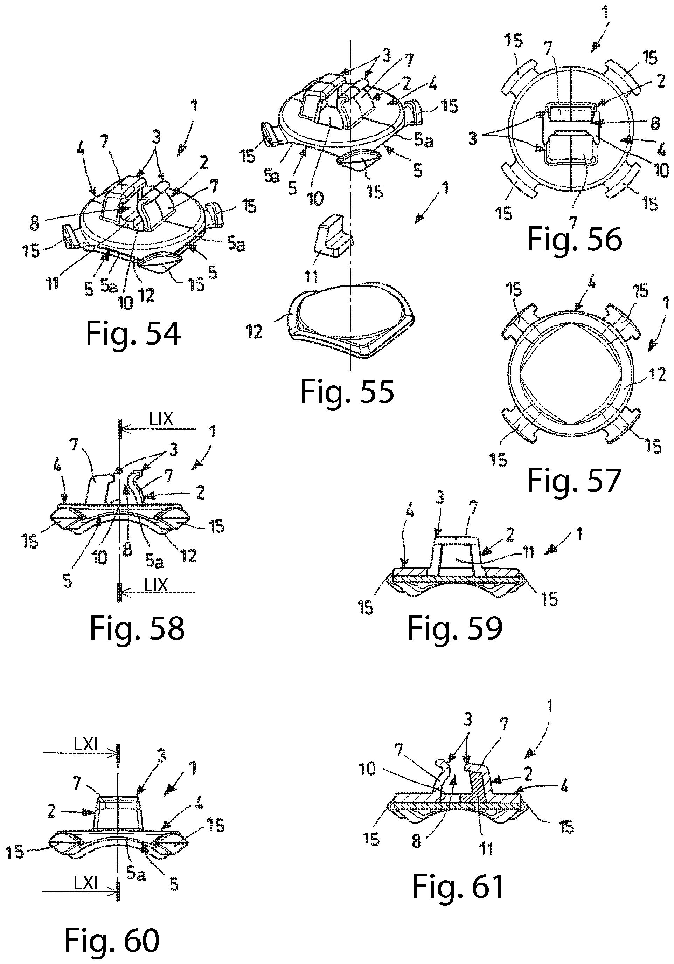

Alternatively, as can be seen in the embodiment illustrated in figures 54 to 63, the housing and locking seat 10 is provided with at least one magnetic element 11 capable of interacting with at least one respective magnetic element (not represented in the attached figures) or ferromagnetic element present on the portion 101 of the eyeglasses 100 to be fastened to hold the latter in the desired position. Advantageously, the magnetic and/or ferromagnetic element arranged on the eyeglasses 100 and adapted for interacting with the magnetic element 11 of the eyeglass carrying device 1, can be engaged, fitted or incorporated directly in the bridge/nosepad and/or in the temples and/or in the lenses of the eyeglasses used so as to allow different couplings between the latter and the eyeglass carrying device 1 provided.

Again with reference to the embodiment illustrated in figures 54 to 63, the housing and locking seat 10 is delimited, at least partially, by a pair of fastening appendages 7 that develop from the supporting portion 4 and at least one of which converges towards the other at a convergence point 8.

Advantageously, the fastening appendage 7 that converges towards the other fastening appendage 7 is elastically deformable to allow a snap-insertion of the respective portion 101 of the eyeglasses 100 in the housing and locking seat 10, at which such a portion 101 is held by the magnetic element 11.

With reference to the embodiments illustrated in figures 1, 2, 4, 8, 9, 11, 26-30, 34-38, 44, 45, 49, 50, 54, 55 and 58-61, the supporting surface 5 of the supporting portion 4 of the eyeglass carrying device 1 is arched, preferably concave, to engage a respective arched convex destination surface 202 of the frame 201 of the bicycle 200 and/or a similar tubular portion arched convex.

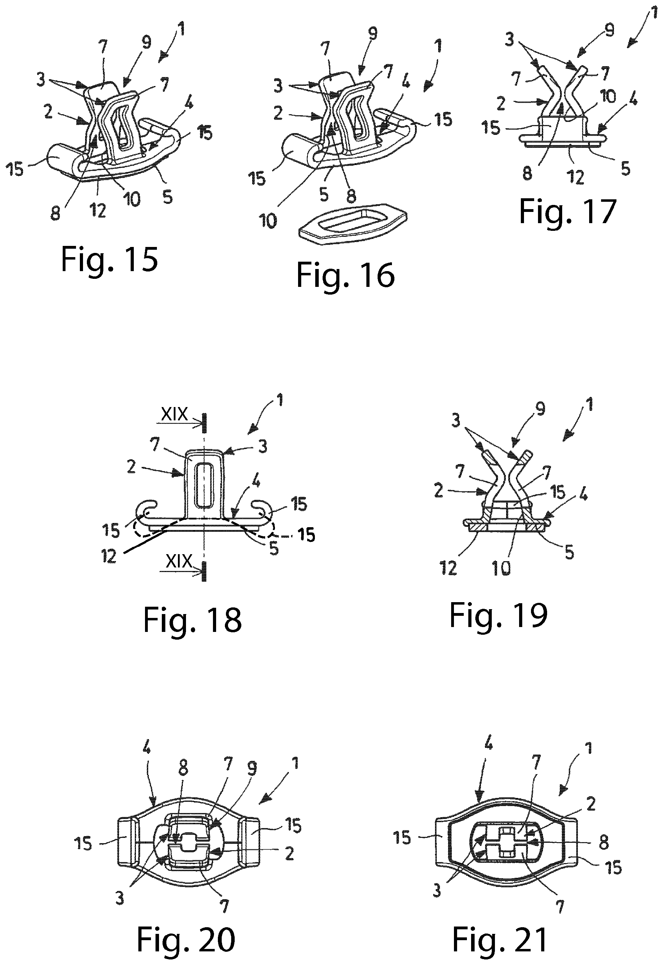

With reference to the embodiments illustrated in figures 16 to 19, the supporting surface 5 of the supporting portion 4 of the eyeglass carrying device 1 is flat to engage a flat destination surface 202 of the frame 201 of the bicycle 200 and/or a similar flat tubular portion.

Again with reference to the embodiments illustrated in figures 16 to 19, the supporting surface 5 of the supporting portion 4 of the eyeglass carrying device 1 has a variable configuration, schematised graphically with a dashed line in figure 18.

In particular, the supporting surface 5 can be switched between an arched concave configuration to engage an arched convex destination surface 202 of the frame 201 of the bicycle 200 and/or a similar arched convex tubular portion and a flat configuration, figures 15 to 17 and 19, to engage a flat destination surface 202 of the frame 201 of the bicycle 200 and/or a similar flat tubular portion.

Going into greater detail, the supporting surface 5 with variable configuration is defined on an elastically deformable supporting portion 4. The elasticity of the supporting portion 4 allows the elastic deformation thereof as well as the switching of the supporting surface 5 between the arched concave configuration and the flat configuration. This characteristic is very advantageous since it gives the eyeglass carrying device the ability to adapt perfectly to the outer profile of the destination surface 202 of the frame 201 of the bicycle 200 and/or of the similar tubular portion, therefore being universal.

In order to ensure a satisfactory level of adherence between the supporting portion 4 of the eyeglass carrying device 1 and the destination surface 202 of the frame 201 of the bicycle 200 and/or of the similar tubular portion, the eyeglass carrying device 1 is advantageously provided with a gasket 12 or a similar interposition element (figures 2, 4, 7-12, 14-19, 21-23, 26-30, 32-38, 41-45, 47-51, 54, 55, 57-61).

The gasket 12 can be interposed between the supporting surface 5 of the supporting portion 4 and the destination surface 202 of the frame 201 of a bicycle 200 and/or a similar tubular portion.

Advantageously, the gasket 12 has a first surface 12a, preferably counter-shaped to the supporting surface 5 of the supporting portion 4, so as to adhere and couple perfectly with the latter and a second surface 12b, facing the opposite way to the first surface 12a that can be arched concave shaped to adhere on an arched convex destination portion 202 of the frame 201 of the bicycle 200, or flat, to adhere on a flat destination portion 202 of the frame 201 of the bicycle 200. Depending on the configuration of the supporting surface 5 of the supporting portion 4 provided, the gasket 12 can be arched concave shaped, flat or can have variable configuration between arched concave shaped or flat.

Advantageously, the gasket 12 is made of an elastically deformable material, preferably EPDM, in other words peroxide (Ethylene-Propylene-Diene-Monomer), to adapt, on one side, to the shape of the supporting surface 5 of the supporting portion 4 and, on the other side, to the shape of the destination surface 202 of the frame 201 of the bicycle 200 and/or of a similar tubular portion.

With reference to the embodiments illustrated in figures 1-33 and 54-63, the fastening mechanism 3 of the engagement portion 2 is joined in one piece to the supporting portion 4 of the eyeglass carrying device 1 to constitute a single monoblock.

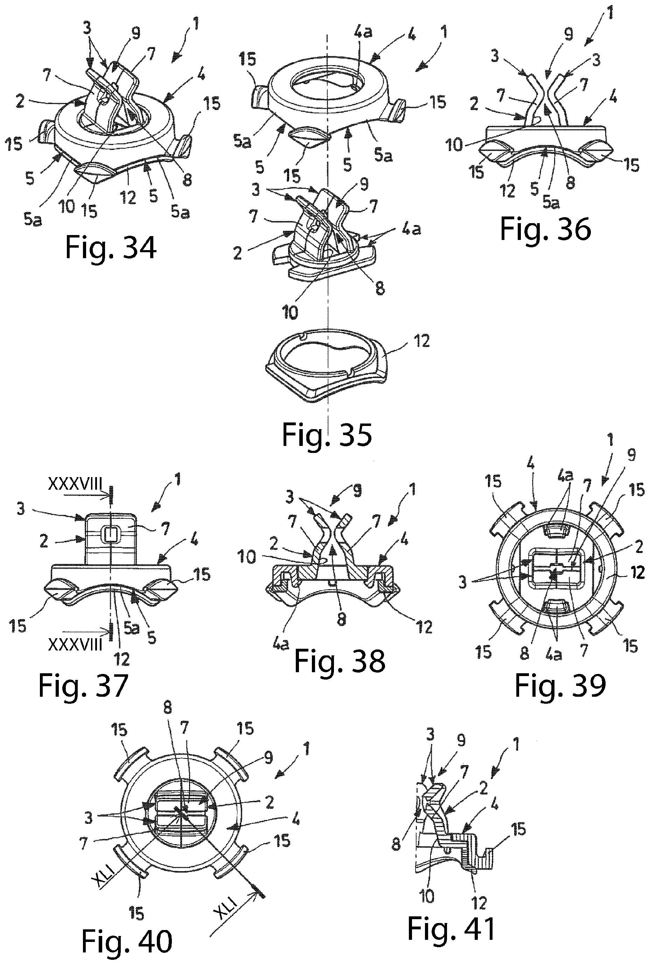

Alternatively, as illustrated in relation to the embodiments according to figures 34-53, the engagement portion 2 provided with the fastening mechanism 3 can be removably constrained to the supporting portion 4 by means of suitable interlocking and/or snap engagement elements 4a.

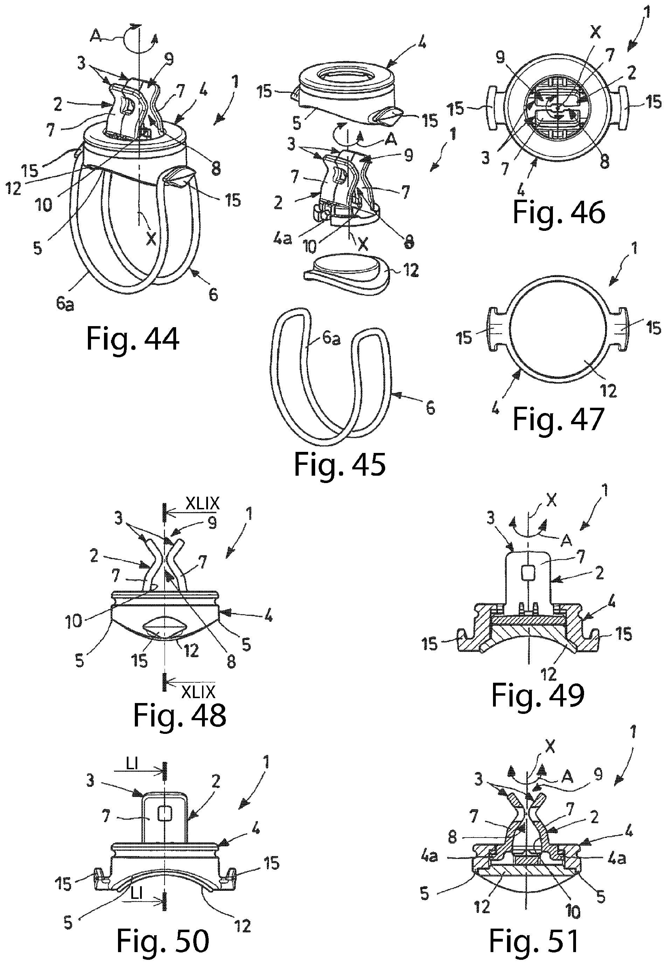

In accordance with a further variant embodiment, the engagement portion 2 can be rotatably constrained to the supporting portion 4 so that the fastening appendages 7 are rotatable with respect to the latter, as represented by the curved arrow "A" represented in figures 44, 52 and 53, around a respective rotation axis "X" that develops between the fastening appendages 7, substantially perpendicular to a reference plane tangent to the destination surface 202 of the frame 201 of the bicycle 200 in the intersection point between such a reference plane and the rotation axis "X", allowing the positioning of the eyeglasses 100 on the bicycle 200 according to different angular positions with respect to the supporting portion 4.

With reference to the attached figures the eyeglass carrying device 1 is equipped with at least one fastening protuberance 15 for the removable engagement of the locking element 6 to the destination surface 202 of the frame 201 of the bicycle 200.

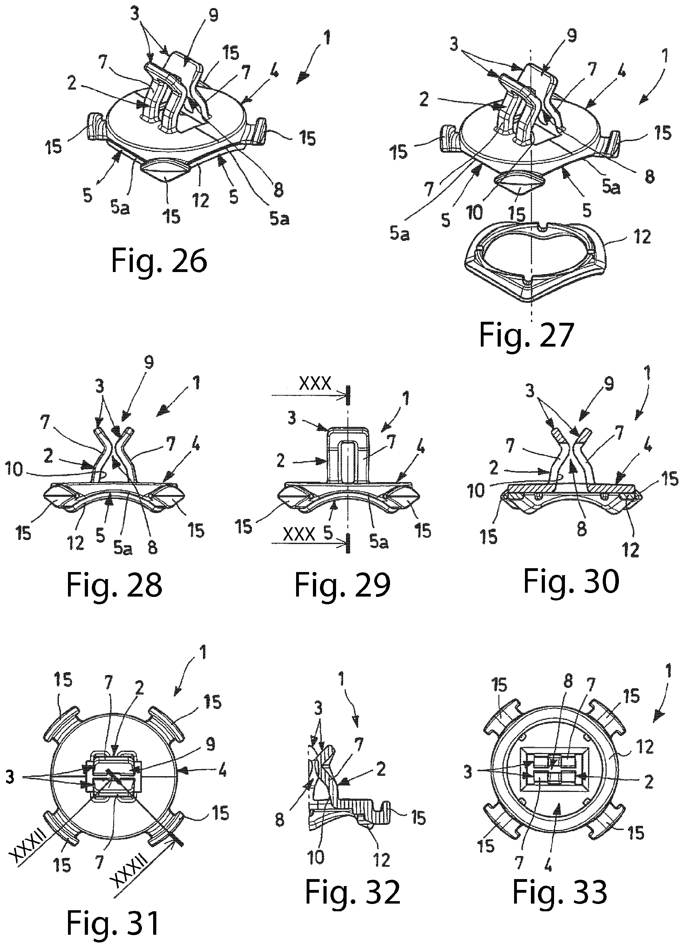

With particular reference to the embodiments illustrated in figures 1-25 and 44-53, the eyeglass carrying device 1 is equipped with two opposite fastening protuberances 15 whereas the embodiments illustrated in figures 26-43 and 54-63 provide for a plurality of fastening protuberance 15, preferably four, arranged substantially at the corners of a reference quadrilateral, namely one arranged at 90° with respect to the adjacent ones.

Irrespective of the number of fastening protuberances 15 provided, each of them is integrated in the supporting portion 4 developing from the latter, preferably cantilevered.

With reference to the embodiments illustrated in figures 26-63, the supporting portion 4 of the eyeglass carrying device 1 has a substantially circular shape from which at least one of the aforementioned fastening protuberances 15, in particular all of them, develops, preferably cantilevered.

Again with reference to the embodiments illustrated in figures 26-33, the supporting surface 5 of the supporting portion 4 is defined by a plurality of concave arched edges 5a, arranged opposite two-by-two according to a substantially square shape, so as to allow the same support of the eyeglass carrying device 1 on the destination surface 202 of the frame 201 of the bicycle 200 and/or of a similar tubular portion by rotating the entire body of the device 1 by 90°.

In accordance with the present invention, there is no reason why the supporting portion 4 of the eyeglass carrying device 1 cannot also have a substantially square or rectangular shape from which at least one of the aforementioned fastening protuberances 15, in particular all of them, develops, preferably cantilevered.

With reference to the embodiments illustrated in figures 22-25, 42-45, 52, 53, 62 and 63, the locking element 6 has a substantially elongated structure in a closed loop, preferably wire-like in a closed loop, even more preferably an O-ring seal 6a, configured to at least partially surround the eyeglass carrying device 1 and keep it engaged to the destination surface 202 of the frame 201 of the bicycle 200 and/or of a similar tubular portion.

In detail, the O-ring seal 6a is configured to at least partially surround each of the fastening protuberances 15 projecting from the supporting portion 4 and keep the eyeglass carrying device 1 adhered to the destination surface 202 of the frame 201 of the bicycle 200 and/or of a similar tubular portion.

The eyeglass carrying device in accordance with the embodiments illustrated in figures 1-21, 26-41, 46-50 and 54-61 is also configured to engage the frame 201 of the bicycle by using one or more O-ring seals 6a or similar elongated locking elements 6.

The eyeglass carrying device described above, as well as a bicycle equipped with such a device, solve the problems encountered in the prior art and achieve important advantages.

Firstly, the device described above allows athletes and/or amateur and/or competitive cyclists to position and lock the eyeglasses in use quickly on the frame of the bicycle with a single hand and without risks of accidents.

In particular, the device according to the present invention allows the quick and immediate locking of the eyeglasses on the frame, preferably on the handlebar stem of the bicycle without having to close the temples thereof. The locking action takes place by simply bringing to bridge of the eyeglasses used up to the housing and locking seat of the device and pressing it towards such a seat so as to force the eyeglasses and be gripped by the fastening mechanism of the engagement portion.

## Claims

1. Eyeglass carrying device (1) for bicycles and/or similar tubular bodies, comprising:
at least one engagement portion (2) provided with at least one fastening mechanism (3) arranged to grip a portion (101) of a pair of eyeglasses (100) to hold the latter in a predetermined position;
at least one supporting portion (4), preferably made on the opposite side with respect to the engagement portion (2), provided with at least one supporting surface (5) adapted for engaging a destination surface (202) of a frame (201) of a bicycle (200) and/or of a similar tubular body not forming part of the eyeglass carrying device (1);
at least one locking element (6) able to be operatively associated with the supporting portion (4) to keep the eyeglass carrying device (1) engaged to the destination surface (202) of the frame (201) of the bicycle (200) and/or at the similar tubular body not forming part of the eyeglass carrying device (1), the locking element (6) having a substantially elongated closed-loop structure, preferably a wire-like closed loop, even more preferably an O-ring seal, configured to at least partially envelop the eyeglass carrying device (1) and keep it engaged to the destination surface (202) of the frame (201) of the bicycle (200) and/or of a similar tubular portion not forming part of the eyeglass carrying device (1);
at least one fastening protuberance (15), preferably two opposite fastening protuberances (15), even more preferably four fastening protuberances (15) arranged substantially at the corners of a reference quadrilateral, for the removable engagement of the locking element (6) and the locking of the eyeglass carrying device (1) on the destination surface (202) of the frame (201) of the bicycle (200) and/or to a similar tubular portion not forming part of the eyeglass carrying device (1), at least one fastening protuberance (15), preferably all of them, being integrated at the supporting portion (4) and developing, preferably cantilevered, from the latter.

2. Eyeglass carrying device (1) according to claim 1, wherein the fastening mechanism (3) of the engagement portion (2) comprises at least one pair of fastening appendages (7) that develop from the supporting portion (4) to converge towards a common convergence point (8) in which such fastening appendages (7) are close to one another or in contact with each other, the fastening appendages (7) diverging from one another going away from the convergence point (8) and on the opposite side to the supporting portion (4) to define a facilitating groove (9) for the engagement of the portion (101) of the eyeglasses (100) not forming part of the eyeglass carrying device (1), the fastening appendages (7) delimiting, at least in part, a housing and locking seat (10) of the portion (101) of the eyeglasses (100) to be fastened and held and being elastically deformable to allow the insertion of such a portion (101) of the eyeglasses (100) in the respective housing and locking seat (10) or the extraction thereof from such a housing and locking seat (10) through the opening out of the fastening appendages (7), or of mobile parts of the latter, at the convergence point (8).

3. Eyeglass carrying device (1) according to claim 1, wherein the engagement portion (2) comprises at least one housing and locking seat (10) of the portion (101) of the eyeglasses (100) to be fastened and held, the housing and locking seat (10) being provided with at least one magnetic element (11) capable of interacting with a magnetic or ferromagnetic element present on the portion (101) of the eyeglasses (100) to be fastened to hold the latter according to a predetermined position, optionally the housing and locking seat (10) being delimited, at least partially, by a pair of fastening appendages (7) that develop from the supporting portion (4) and at least one of which converges towards the other at a convergence point (8) and, preferably, being elastically deformable to allow snap-insertion of the respective portion (101) of the eyeglasses (100) in the housing and locking seat (10).

4. Eyeglass carrying device (1) according to claim 1 or 2, wherein the supporting surface (5) of the supporting portion (4) is arched concave shaped to engage an arched convex destination surface (202) of the frame (201) of the bicycle (200) and/or a similar arched convex tubular portion not forming part of the eyeglass carrying device (1).

5. Eyeglass carrying device (1) according to claim 1 or 2, wherein the supporting surface (5) of the supporting portion (4) is flat to engage a flat destination surface (202) of the frame (201) of the bicycle (200) and/or a similar flat tubular portion not forming part of the eyeglass carrying device (1).

6. Eyeglass carrying device (1) according to claim 1 or 2, wherein the supporting surface (5) of the supporting portion (4) has a variable configuration, preferably the supporting surface (5) can be switched between an arched concave configuration to engage an arched convex destination surface (202) of the frame (201) of the bicycle (200) and/or a similar arched convex tubular portion not forming part of the eyeglass carrying device (1) and a flat configuration to engage a flat destination surface (202) of the frame (201) of the bicycle (200) and/or a similar flat tubular portion.

7. Eyeglass carrying device (1) according to claim 6, wherein the supporting surface (4) with variable configuration is defined on an elastically deformable supporting portion (5), the elasticity of the supporting portion (4) giving to this latter the ability to deform, allowing the switching of the supporting surface (5) between the arched concave configuration and the flat configuration.

8. Eyeglass carrying device (1) according to any one of claims 1 to 7, also comprising at least one gasket (12) or a similar interposition element able to be arranged between the supporting surface (5) of the supporting portion (4) and the destination surface (202) of the frame (201) of the bicycle (200) and/or a similar tubular portion not forming part of the eyeglass carrying device (1).

9. Eyeglass carrying device (1) according to claim 8, wherein the gasket (12) or the similar interposition element has:
a first surface (12a), preferably counter-shaped to the supporting surface (5) of the supporting portion (4) ;
a second surface (12b), facing away from the first surface (12a), that is arched concave or flat or with variable configuration between an arched concave configuration and a flat configuration.

10. Eyeglass carrying device (1) according to claim 9, wherein the gasket (12) or the similar interposition element is made of an elastically deformable material, preferably Ethylene Propylene Diene Monomer, in other words EPDM, to adapt to the shape of the supporting surface (5) of the supporting portion (4) and to the shape of the destination surface (202) of the frame (201) of a bicycle (200) and/or of a similar tubular portion not forming part of the eyeglass carrying device (1).

11. Eyeglass carrying device (1) according to any one of the previous claims, wherein the fastening mechanism (3) of the engagement portion (2) is joined in one piece to the supporting portion (4).

12. Eyeglass carrying device (1) according to any one of claims 1 to 10, wherein the engagement portion (2) provided with the fastening mechanism (3) can be removably constrained to the supporting portion (4), preferably able to be rotatably constrained to the supporting portion (4).

13. Eyeglass carrying device (1) according to any one of the previous claims, wherein the supporting portion (4) has a substantially circular shape from which at least one fastening protuberance (15) develops, preferably cantilevered.

14. Eyeglass carrying device (1) according to any one of the previous claims, wherein the supporting portion (4) has a substantially square or rectangular shape from which at least one fastening protuberance (15) develops, preferably cantilevered.

15. Eyeglass carrying device (1) according to any one of the previous claims, wherein the locking element (6) is configured to envelop at least partially at least one fastening protuberance (14) projecting from the supporting portion (4) of the eyeglass carrying device (1).
